# EUROPEAN PATENT APPLICATION

(11) **EP 4 389 421 A1**
(43) Date of publication of application: **26.06.2024**
(21) Application number: 22858131.0
(22) Date of filing: 27.05.2022
(51) Int. Cl.: B32B 27/34, B65D 65/40, C08G 69/26

(54) **MULTILAYER BODY**

(30) Priority: 17.08.2021 JP 2021132584
(71) Applicant: MITSUBISHI GAS CHEMICAL COMPANY, INC., Chiyoda-ku Tokyo 100-8324 (JP)
(72) Inventor: YAMASHITA Momoko, Hiratsuka-shi, Kanagawa 254-0016 (JP); OGURO Hatsuki, Hiratsuka-shi, Kanagawa 254-0016 (JP); MIYABE Takanori, Hiratsuka-shi, Kanagawa 254-0016 (JP); ODA Takafumi, Hiratsuka-shi, Kanagawa 254-0016 (JP)
(74) Representative: Vossius & Partner Patentanwälte Rechtsanwälte mbB
(86) International application number: PCT/JP2022/021793
(87) International publication number: WO 2023/021807

(57) **Abstract**

Provided is a multilayer body body including a stretched film and a layer other than the stretched film, the stretched film containing a polyamide resin (A) in a proportion of more than 60 mass%, the polyamide resin (A) containing a diamine-derived structural unit and a dicarboxylic acid-derived structural unit, 70 mol% or more of the diamine-derived structural unit being derived from xylylenediamine, from 70.1 to 92.0 mol% of the dicarboxylic acid-derived structural unit being derived from an α,ω-linear aliphatic dicarboxylic acid having from 4 to 8 carbons, and from 29.9 to 8.0 mol% of the dicarboxylic acid-derived structural unit being derived from an α,ω-linear aliphatic dicarboxylic acid having from 9 to 12 carbons.

## Description

### Technical Field

The present invention relates to a multilayer body.

### Background Art

Polyamide resins exhibit excellent properties such as processability, mechanical strength, durability, thermal resistance, oxygen barrier properties, and chemical resistance, and thus are widely used as various industrial materials.

As such polyamide resins, aliphatic polyamide resins typified by polyamide 6 and polyamide 66 have been used for many years. Furthermore, aromatic polyamide resins in which aromatic dicarboxylic acids and/or aromatic diamines are used as the raw materials of the polyamide resins are also being used. As such aromatic polyamide resins, for example, polyamide resins (MXD6), which are synthesized from meta-xylylenediamine and adipic acid, are known.

For example, Patent Document 1 discloses a film laminate in which a polyamide layer (A) containing a xylylene-based polyamide resin (a) as a main component and a layer (B) including a polyamide resin composition are laminated, in which the polyamide resin composition contains from 74 to 94 mass% of a polyamide resin (b), from 0.1 mass% to 2.8 mass% of an olefin-based elastomer, from 0.01 to 3 mass% of an ionomer resin, and from 5.5 to 20 mass% of a polyamide resin (c), in which the polyamide resin (b) is an aliphatic polyamide resin, and the polyamide resin (c) is a xylylene-based polyamide resin.

### Citation List

### Patent Documents

Patent Document 1: WO 2017/073560

### Summary of Invention

### Technical Problem

As described in Patent Document 1, when a multilayer body including a polyamide resin layer (MXD6 layer), which is synthesized from meta-xylylenediamine and adipic acid, and a polyamide 6 layer and/or a polyolefin layer is formed, pinholes are likely to be formed in the MXD6 layer because the polyamide 6 layer and/or the polyolefin layer is excellent in flexibility while the MXD6 layer is rigid. In particular, when an MXD6 layer functions as a barrier layer in a multilayer body, the formation of pinholes in the MXD6 layer causes a reduction in barrier properties. In addition, pinholes may be formed, originated from the pinholes originating from the MXD6 layer in the multilayer body.

An object of the present invention is to solve such issue, and to provide a multilayer body having high pinhole resistance and high oxygen barrier properties.

### Solution to Problem

The present inventors conducted an examination on the basis of the issues described above, and, as a result, found that the issues can be solved by adopting an α,ω-linear aliphatic dicarboxylic acid having from 9 to 12 carbons, in combination with an α,ω-linear aliphatic dicarboxylic acid having from 4 to 8 carbons, such as adipic acid, as raw material monomers for a polyamide resin used in a polyamide resin layer.

Specifically, the issues described above are solved by the following solutions.
<1> A multilayer body including: a stretched film and a layer other than the stretched film, the stretched film containing a polyamide resin (A) in a proportion of more than 60 mass%, the polyamide resin (A) containing a diamine-derived structural unit and a dicarboxylic acid-derived structural unit, 70 mol% or more of the diamine-derived structural unit being derived from xylylenediamine, from 70.1 to 92.0 mol% of the dicarboxylic acid-derived structural unit being derived from an α,ω-linear aliphatic dicarboxylic acid having from 4 to 8 carbons, and from 29.9 to 8.0 mol% of the dicarboxylic acid-derived structural unit being derived from an α,ω-linear aliphatic dicarboxylic acid having from 9 to 12 carbons.
<2> The multilayer body according to <1>, in which at least one of the layers other than the stretched film is a layer containing polyamide 6 and/or polyamide 6/66.
<3> The multilayer body according to <1> or <2>, in which at least one of the layers other than the stretched film is a layer containing a polyolefin.
<4> The multilayer body according to any one of <1> to <3>, in which from 75.0 to 88.0 mol% of the dicarboxylic acid-derived structural unit is derived from the α,ω-linear aliphatic dicarboxylic acid having from 4 to 8 carbons, and from 25.0 to 12.0 mol% of the dicarboxylic acid-derived structural unit is derived from the α,ω-linear aliphatic dicarboxylic acid having from 9 to 12 carbons.
<5> The multilayer body according to any one of <1> to <4>, in which the α,ω-linear aliphatic dicarboxylic acid having from 4 to 8 carbons contains adipic acid, and the α,ω-linear aliphatic dicarboxylic acid having from 9 to 12 carbons contains sebacic acid.
<6> The multilayer body according to any one of <1> to <5>, in which 70 mol% or more of the diamine-derived structural unit is derived from meta-xylylenediamine.

### Advantageous Effects of Invention

According to the present invention, a multilayer body having high pinhole resistance and high oxygen barrier properties can be provided.

### Brief Description of Drawings

FIG. 1 is a cross-sectional schematic view illustrating an example of a multilayer body of the present invention.
FIG. 2 is a schematic view illustrating a method for measuring a gel fraction in Examples.

### Description of Embodiments

Hereinafter, embodiments for conducting the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

In the present specification, ppm means a mass ppm.

When a measurement method or the like of a standard set forth in the present specification differs depending on the year, it is based on the standard as of January 1, 2021, unless otherwise stated.

A multilayer body of the present embodiments includes: a stretched film (in the present specification, sometimes referred to as "polyamide resin layer") and a layer other than the stretched film, the stretched film containing a polyamide resin (A) in a proportion of more than 60 mass%. The multilayer body is characterized in that: the polyamide resin (A) contains a diamine-derived structural unit and a dicarboxylic acid-derived structural unit; 70 mol% or more of the diamine-derived structural unit is derived from xylylenediamine; from 70.1 to 92.0 mol% of the dicarboxylic acid-derived structural unit is derived from an α,ω-linear aliphatic dicarboxylic acid having from 4 to 8 carbons; and from 29.9 to 8.0 mol% of the dicarboxylic acid-derived structural unit is derived from an α,ω-linear aliphatic dicarboxylic acid having from 9 to 12 carbons. Such a configuration can provide a multilayer body having high pinhole resistance and high oxygen barrier properties. Furthermore, a molding temperature condition can be lowered, and thus a multilayer body suppressed in gelation of the polyamide resin layer can be obtained.

That is, the polyamide resin layer containing, in a proportion of more than 60 mass%, a polyamide resin synthesized from xylylenediamine and an α,ω-linear aliphatic dicarboxylic acid having from 4 to 8 carbons such as adipic acid is excellent in oxygen barrier properties and functions as an oxygen barrier layer in the multilayer body. However, such a polyamide resin layer is rigid, and thus it is presumed that, in a multilayer body in which the polyamide resin layer is combined with a flexible layer such as a polyamide 6 layer or a polyolefin layer, pinholes are likely to be formed in the polyamide resin layer. In the present embodiment, it is presumed that the modification of the polyamide resin used in the polyamide resin layer with an α,ω-linear aliphatic dicarboxylic acid having from 9 to 12 carbons can achieve high pinhole resistance while maintaining excellent oxygen barrier properties of the polyamide resin layer.

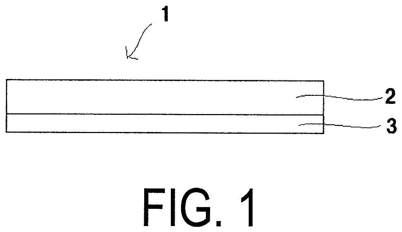

FIG. 1 illustrates an example of a cross-sectional view of the multilayer body of the present embodiments, in which reference numeral 1 denotes the multilayer body, reference numeral 2 denotes the polyamide resin layer (stretched film), and reference numeral 3 denotes another layer. As illustrated in FIG. 1, the multilayer body 1 of the present embodiments has another layer 3 besides the stretched film 2. Another layer includes, for example, a highly flexible layer, and examples thereof include a layer containing an aliphatic polyamide resin (preferably a layer containing polyamide 6 and/or polyamide 66/6, and more preferably a layer containing polyamide 6), a layer containing a polyolefin, an adhesive layer, a sealant layer, an oxygen absorbing layer, an oxygen-permeable layer, a metal deposition layer, a design layer (paper, resin), an aroma-retaining layer, an oil-resistant layer, a water vapor barrier layer, a flame-retardant layer, an insulating layer, an easy-to-cut layer, and an antifogging layer.

The multilayer body of the present embodiments may have only one or two or more of the layers other than the stretched film. A number of the layers other than the stretched film is preferably 1 or more, more preferably 2 or more, and may be 3 or more, and is preferably 10 or less, more preferably 8 or less, and may be 5 or less. Further, two or more layers having the same performance may be used.

A first example of the multilayer body of the present embodiments is a multilayer body in which at least one of the layers other than the stretched film is a layer containing an aliphatic polyamide resin (preferably a layer containing polyamide 6 and/or polyamide 66/6, and more preferably a layer containing polyamide 6) (hereinafter sometimes referred to as "aliphatic polyamide resin layer"). In the present embodiments, the aliphatic polyamide resin layer and the polyamide resin layer may be or may not be in contact with each other.

The multilayer body of the first example is, for instance, a multilayer body including the aliphatic polyamide resin layer/polyamide resin layer (stretched film).

Further, examples of the multilayer body of the first example include a multilayer body including a layer configuration of aliphatic polyamide resin layer/polyamide resin layer (stretched film)/aliphatic polyamide resin layer. Further, in the multilayer body, another layer such as an adhesive layer may be interposed between the aliphatic polyamide resin layer and the polyamide resin layer (stretched film), but the aliphatic polyamide resin layer and the polyamide resin layer (stretched film) are preferably in contact with each other. In the first example, when the multilayer body has an adhesive layer, it preferably includes a layer configuration of aliphatic polyamide resin layer/adhesive layer/polyamide resin layer (stretched film)/adhesive layer/aliphatic polyamide resin layer. In this case, the aliphatic polyamide resin layer and the adhesive layer and/or the adhesive layer and the polyamide resin layer (stretched film) are preferably in contact with each other.

Further, the aliphatic polyamide resin layer may be stretched or non-stretched, but is preferably stretched. Substantially, the layer is generally stretched simultaneously with stretching of the polyamide resin layer (stretched film).

The aliphatic polyamide resin contained in the aliphatic polyamide resin layer in the present embodiments may be any of homopolymers and copolymers of monomers constituting the aliphatic polyamide resin. Specific examples of the aliphatic polyamide resin include polycaproamide (polyamide 6), a copolymer of polyhexamethyleneadipamide and polycaproamide (polyamide 66/6), polyundecanamide (polyamide 11), polydodecanamide (polyamide 12), polyethyleneadipamide (polyamide 26), polytetramethylenesuccinamide (polyamide 44), polytetramethyleneglutamide (polyamide 45), polytetramethyleneadipamide (polyamide 46), polytetramethylenesuberamide (polyamide 48), polytetramethyleneazelamide (polyamide 49), polytetramethylenesebacamide (polyamide 410), polytetramethylenedodecamide (polyamide 412), polypentamethylenesuccinamide (polyamide 54), polyhexamethyleneglutamide (polyamide 55), polypentamethyleneadipamide (polyamide 56), polypentamethylenesuberamide (polyamide 58), polypentamethyleneazelamide (polyamide 59), polypentamethylenesebacamide (polyamide 510), polypentamethylenedodecamide (polyamide 512), polyhexamethylenesuccinamide (polyamide 64), polyhexamethyleneglutamide (polyamide 65), polyhexamethyleneadipamide (polyamide 66), polyhexamethylenesuberamide (polyamide 68), polyhexamethyleneazelamide (polyamide 69), polyhexamethylenesebacamide (polyamide 610), polyhexamethylenedodecamide (polyamide 612), polyhexamethylenetetradecamide (polyamide 614), polyhexamethylenehexadecamide (polyamide 616), polyhexamethyleneoctadecamide (polyamide 618), polynonamethyleneadipamide (polyamide 96), polynonamethylenesveramide (polyamide 98), polynonamethyleneazelamide (polyamide 99), polynonamethylenesebacamide (polyamide 910), polynonamethylenedodedecamide (polyamide 912), polydecamethyleneadipamide (polyamide 106), polydecamethylenesuberamide (polyamide 108), polydecamethyleneazelamide (polyamide 109), polydecamethylenesebacamide (polyamide 1010), polydecamethylenedodecamide (polyamide 1012), polydodecamethyleneadipamide (polyamide 126), polydodecamethylenesuberamide (polyamide 128), polydodecamethyleneazelamide (polyamide 129), polydodecamethylenesebacamide (polyamide 1210), and polydodecamethylenedodecamide (polyamide 1212). Polyamide 6 and polyamide 66/6 are preferred, and polyamide 6 is more preferred.

The aliphatic polyamide resin layer in the first example contains the aliphatic polyamide resin in an amount of preferably 70 mass% or more, more preferably 80 mass% or more, and still more preferably 90 mass% or more, and may contain the aliphatic polyamide resin in an amount of 95 mass% or more.

One type, or two or more types of the aliphatic polyamide resins may be contained in the aliphatic polyamide resin layer. When two or more types are contained, a total amount thereof is preferably in the above range.

The aliphatic polyamide resin layer in the first example may contain another component within a range that does not depart from the spirit of the present invention. Examples of the other components include polyolefins and ionomer resins.

Additionally, as for the aliphatic polyamide resin layer in the first example, reference can be made to the descriptions in Paragraphs [0047] to [0079] of WO 2017/073560, the contents of which are incorporated herein by reference.

The adhesive layer in the first example preferably contains an acid-modified polyolefin as an adhesive. The acid-modified polyolefin is preferably an acid-modified polyolefin which is a polyolefin modified with an unsaturated carboxylic acid such as acrylic acid, methacrylic acid, maleic acid, or maleic anhydride.

The adhesive layer in the first example preferably contains the adhesive in an amount of 80 mass% or more, more preferably 90 mass% or more, and still more preferably 95 mass% or more.

The adhesive layer in the first example may contain another component within a range that does not depart from the spirit of the present invention.

As for details of the adhesive layer, reference can be made to the descriptions in Paragraph [0015] of JP 2012-035504 A and Paragraph [0043] of WO 2015/083558, the contents of which are incorporated herein by reference.

In the first example, a thickness of the polyamide resin layer (stretched film) is preferably 1 um or more, more preferably 2 µm or more, and still more preferably 5 µm or more, and is preferably 400 um or less, more preferably 300 µm or less, and still more preferably 150 µm or less.

In the first example, a thickness of one aliphatic polyamide resin layer is preferably 1 um or more, more preferably 2 µm or more, and still more preferably 5 µm or more, and is preferably 500 um or less, and more preferably 300 µm or less.

In the first example, when the adhesive layer is provided, a thickness thereof is preferably 1 µm or more, more preferably 2 µm or more, and still more preferably 5 µm or more, and is preferably 200 µm or less, and more preferably 100 µm or less.

The multilayer body of the first example can be produced, for example, according to the descriptions in Paragraphs [0080] to [0092] of WO 2017/073560, the contents of which are incorporated herein by reference.

A second example of the layer configuration of the multilayer body of the present embodiments is a multilayer body in which at least one of the layers other than the stretched film is a layer containing a polyolefin (polyolefin layer). In the present embodiments, the polyolefin layer and the polyamide resin layer may be or may not be in contact with each other.

The multilayer body of the second example preferably has a layer configuration of polyolefin layer/polyamide resin layer (stretched film)/polyolefin layer. In this case, the polyolefin layer and the polyamide resin layer (stretched film) are preferably in contact with each other.

When the multilayer body of the second example has an adhesive layer, the multilayer body preferably has a layer configuration of polyolefin layer/adhesive layer/polyamide resin layer (stretched film)/adhesive layer/polyolefin layer. In this case, the polyolefin layer and the adhesive layer and/or the adhesive layer and the polyamide resin layer (stretched film) are preferably in contact with each other. Further, the polyolefin layer may be stretched or non-stretched, but is preferably stretched. Substantially, the layer is generally stretched simultaneously with stretching of the polyamide resin layer (stretched film).

The polyolefin contained in the polyolefin layer in the present embodiments may be either a homopolymer or a copolymer of an α-olefin. Further, another monomer component may be copolymerized within a range that does not depart from the spirit of the present invention, and a polymer containing 50 mol% or more of a polypropylene unit (polypropylene-based polymer) is preferable. Specific examples of the polyolefin include polyethylene, homopolypropylene, propylene-ethylene random copolymer, and propylene-ethylene block copolymer.

The polyolefin may be partially composed of an acid-modified polyolefin. Due to the presence of the acid-modified polyolefin, adhesiveness to the polyamide resin layer can be improved. The acid-modified polyolefin is preferably an acid-modified polyolefin which is a polyolefin modified with an unsaturated carboxylic acid such as acrylic acid, methacrylic acid, maleic acid, or maleic anhydride. In particular, when the polyamide resin layer (stretched film) and the polyolefin layer are in contact with each other in the multilayer body of the second example, the polyolefin layer preferably contains an acid-modified polyolefin. A content of the acid-modified polyolefin in the polyolefin layer is preferably from 1 to 20 mass% in the polyolefin layer.

The polyolefin layer in the second example contains the polyolefin in an amount of preferably 80 mass% or more, more preferably 90 mass% or more, and still more preferably 95 mass% or more.

One type, or two or more types of the polyolefins may be contained in the polyolefin layer. When two or more types are contained, a total amount thereof is preferably in the above range.

The polyolefin layer in the second example may contain another component within a range that does not depart from the spirit of the present invention.

Additionally, as for the polyolefin layer in the second example, reference can be made to the descriptions in Paragraph [0014] of JP 2012-035504 A, the contents of which are incorporated herein by reference.

The adhesive layer in the second example preferably contains an acid-modified polyolefin as an adhesive. The acid-modified polyolefin is preferably an acid-modified polyolefin which is a polyolefin modified with an unsaturated carboxylic acid such as acrylic acid, methacrylic acid, maleic acid, or maleic anhydride.

The adhesive layer in the second example preferably contains the adhesive in an amount of 80 mass% or more, more preferably 90 mass% or more, and still more preferably 95 mass% or more.

The adhesive layer in the second example may contain another component within a range that does not depart from the spirit of the present invention.

As for details of the adhesive layer, reference can be made to the descriptions in Paragraph [0015] of JP 2012-035504 A and Paragraph [0043] of WO 2015/083558, the contents of which are incorporated herein by reference.

In the second example, a thickness of the polyamide resin layer (stretched film) is preferably 1 µm or more, more preferably 2 µm or more, and still more preferably 5 µm or more, and is preferably 500 µm or less, more preferably 400 µm or less, and still more preferably 300 µm or less.

In the second example, a thickness of the polyolefin layer is preferably 10 um or more, more preferably 20 um or more, and still more preferably 50 um or more, and is preferably 2500 um or less, and more preferably 2000 µm or less.

In the second example, when the adhesive layer is provided, a thickness thereof is preferably 1 µm or more, more preferably 2 um or more, and still more preferably 5 um or more, and is preferably 3000 um or less, and more preferably 2500 µm or less.

The multilayer body of the second example can be produced, for example, according to the description in Paragraph [0033] of JP 2012-035504 A, the contents of which are incorporated herein by reference.

A third example of the layer configuration of the multilayer body of the present embodiments is a multilayer body in which at least one of the layers other than the stretched film is a layer containing a deoxidant (oxygen absorbing layer). In the present embodiments, the oxygen absorbing layer and the polyamide resin layer may be or may not be in contact with each other. The multilayer body of the third example preferably has any one of the following layer configurations. The layers which will be described below may be or may not be in contact with each other, but are preferably in contact with each other.
Oxygen absorbing layer/polyamide resin layer (stretched film)
Oxygen absorbing layer/adhesive layer/polyamide resin layer (stretched film)
Oxygen absorbing layer containing adhesive/polyamide resin layer (stretched film)

The oxygen absorbing layer in the present embodiments preferably contains a deoxidant and a thermoplastic resin. Examples of the deoxidant include those containing, as a main component for an oxygen absorption reaction, a metal powder such as iron powder, a reducing inorganic substance such as an iron compound, a reducing organic substance such as a polyhydric phenol, a polyhydric alcohol, or an ascorbic acid or a salt thereof, a metal complex, or the like. Among these, from the viewpoint of deoxidation performance, the deoxidant preferably contains an iron powder, more preferably contains an iron powder and a metal halide, and, still more preferably, is a deoxidant in which a metal halide is attached to an iron powder. The iron powder used in the deoxidant is not particularly limited as long as the iron powder is dispersible in a thermoplastic resin and is able to induce a deoxidation reaction. Typically, an iron powder used as a deoxidant can be used. Specific examples of the iron powder include reduced iron powder, sponge iron powder, sprayed iron powder, ground iron powder, electrolytic iron powder, and crushed iron. Furthermore, iron powder containing less oxygen, silicon, and the like as impurities is preferred, and iron powder having a metal iron content of 95 mass% or more is particularly preferred.

The metal halide used in the deoxidant catalytically acts for an oxygen absorption reaction of metal iron. Specific preferred examples of the metal include at least one type selected from the group consisting of alkali metals, alkaline earth metals, copper, zinc, aluminum, tin, iron, cobalt, and nickel. In particular, lithium, potassium, sodium, magnesium, calcium, barium, and iron are preferred. Furthermore, specific preferred examples of the halide include chlorides, bromides, and iodides, and chlorides are particularly preferred. An amount of the metal halide blended is preferably from 0.1 to 20 parts by mass with respect to 100 parts by mass of the metal. It is preferable that substantially all of the metal of the metal halide adhere to the metal ion and that there be few metal halides which are free in the deoxidant. When the metal halide acts effectively, the amount is sufficiently from 0.1 to 5 parts by mass. An iron powder having a surface coated with a metal halide can be used as the deoxidant in the third example.

Specific examples of the thermoplastic resin used in the oxygen absorbing layer include polyolefins such as polyethylene, polypropylene, polybutadiene, and polymethylpentene, elastomers, modified products thereof, and mixed resins thereof. In particular, 50 mass% or more of the thermoplastic resin used in the oxygen absorbing layer is preferably polypropylene.

A mass ratio of the deoxidant to the thermoplastic resin (deoxidant/thermoplastic resin) in the oxygen absorbing layer is preferably from 5/95 to 50/50, more preferably from 10/90 to 40/60. When the ratio is in this range, the deoxidant can exhibit a good deoxidation performance without negatively affecting molding processability and appearance of the multilayer body.

In the third example, a total of the deoxidant and the thermoplastic resin contained in the oxygen absorbing layer accounts for preferably 90 mass% or more, more preferably 95 mass% or more, and still more preferably 98 mass% or more of the oxygen absorbing layer.

One type or two or more types of each of the deoxidants and the thermoplastic resins may be contained in the oxygen absorbing layer.

The oxygen absorbing layer in the third example may contain another component within a range that does not depart from the spirit of the present invention.

Additionally, as for the oxygen absorbing layer in the third example, reference can be made to the descriptions in Paragraphs [0015] to [0025] of WO 2015/083558, the contents of which are incorporated herein by reference.

The adhesive layer in the third example preferably contains an acid-modified polyolefin as an adhesive. The acid-modified polyolefin is preferably an acid-modified polyolefin which is a polyolefin modified with an unsaturated carboxylic acid such as acrylic acid, methacrylic acid, maleic acid, or maleic anhydride.

The adhesive layer in the third example preferably contains the adhesive in an amount of 80 mass% or more, more preferably 90 mass% or more, and still more preferably 95 mass% or more.

The adhesive layer in the third example may contain another component within a range that does not depart from the spirit of the present invention.

As for details of the adhesive layer, reference can be made to the descriptions in Paragraph [0015] of JP 2012-035504 A and Paragraph [0043] of WO 2015/083558, the contents of which are incorporated herein by reference.

In the third example, a thickness of the polyamide resin layer (stretched film) is preferably 1 µm or more, more preferably 5 µm or more, and still more preferably 10 µm or more, and is preferably 500 µm. or less, more preferably 400 µm or less, and still more preferably 300 µm or less.

In the third example, a thickness of the oxygen absorbing layer is preferably 1 um or more, more preferably 5 µm or more, and still more preferably 10 µm or more, and is preferably 500 µm or less, and more preferably 400 µm or less.

In the third example, when the adhesive layer is provided, a thickness thereof is preferably 1 µm or more, more preferably 2 µm or more, and still more preferably 5 um or more, and is preferably 200 µm or less, and more preferably 100 µm or less.

The multilayer body of the third example can be produced, for example, according to the descriptions in Paragraph [0047] of WO 2015/083558, the contents of which are incorporated herein by reference.

A fourth example of the layer configuration of the multilayer body of the present embodiments is a multilayer body in which at least one of the layers other than the stretched film is a metal deposition layer. In the present embodiments, the metal deposition layer and the polyamide resin layer may be or may not be in contact with each other. The multilayer body of the fourth example preferably has any one of the following layer configurations. The layers which will be described below may be or may not be in contact with each other, but are preferably in contact with each other.
Metal deposition layer/polyamide resin layer (stretched film)
Metal deposition layer/polyamide resin layer (stretched film)/polyolefin layer
Metal deposition layer/polyamide resin layer (stretched film)/adhesive layer/polyolefin layer
Metal deposition layer/polyamide resin layer (stretched film)/adhesive layer/recycled olefin layer/olefin layer

The metal deposition layer in the present embodiments is preferably an aluminum deposition layer. The aluminum deposition layer can be formed on (preferably on a surface of) the polyamide resin layer (stretched film) by using, for example, a vacuum deposition method.

The vacuum deposition method can be conducted as follows: high-purity aluminum metal is heated to, usually, from 1400 to 1500°C by high-frequency induction heating, direct energization heating, electron beam heating, or the like to be evaporated, and is deposited using a vacuum degree of about 10⁻⁴ torr, for example, a vacuum degree of from about 1.0 × 10⁻⁴ to about 5.0 × 10⁻⁴ torr.

The aluminum deposition layer has a thickness of preferably 20 nm or more, more preferably 25 nm or more, and still more preferably 30 nm or more. The aluminum deposition layer also has a thickness of preferably 100 nm or less, more preferably 95 nm or less, and still more preferably 90 nm or less.

In the present embodiments, the aluminum deposition layer is unlikely to be peeled off from the polyamide resin layer (stretched film), and the pinhole resistance can be enhanced. Additionally, as for details of the metal deposition layer, reference can be made to the description of WO 2018/083962, the contents of which are incorporated in the present specification by reference.

When a polyolefin layer is provided in the multilayer body of the fourth example, details thereof are the same as those for the polyolefin layer given in the second example, and a preferred scope thereof is also the same.

When an adhesive layer is provided in the multilayer body of the fourth example, details thereof are the same as those for the adhesive layer given in the second example, and a preferred scope thereof is also the same.

When a recycled olefin layer is provided in the multilayer body of the fourth example, a layer containing a recycled polyolefin is exemplified. Examples of the recycled polyolefin include recycled polypropylene. Other details of the recycled olefin layer are the same as those for the polyolefin layer given in the second example.

Furthermore, the multilayer bodies of the first to fourth examples may have another layer within a range that does not depart from the spirit of the present invention. Specific examples of the other layer include an oxygen permeable layer, a sealant layer, and a printed layer.

As for the oxygen permeable layer, reference can be made to the descriptions in Paragraphs [0011] to [0014] of WO 2015/083558, the contents of which are incorporated herein by reference.

As for the sealant layer, reference can be made to the description in Paragraph [0045] of WO 2015/083558, the contents of which are incorporated herein by reference.

As for a heat seal layer, reference can be made to the descriptions in Paragraphs [0037] to [0038] of WO 2018/083962, the contents of which are incorporated herein by reference.

Next, the stretched film (polyamide resin layer) in the present embodiments will be described.

The stretched film in the present embodiments contains the polyamide resin (A) in a proportion of more than 60 mass%. Due to the presence of the polyamide resin (A), a polyamide resin layer having excellent pinhole resistance and oxygen barrier properties can be obtained, and the pinhole resistance and oxygen barrier properties of the multilayer body can be improved.

A proportion of the polyamide resin (A) in the stretched film (polyamide resin layer) is preferably 70 mass% or more, more preferably 80 mass% or more, still more preferably 90 mass% or more, and even still more preferably 95 mass% or more, and may be 99 mass% or more.

The stretched film (polyamide resin layer) in the present embodiments may contain only one type or two or more types of the polyamide resins (A). When two or more types are contained, the total amount thereof is preferably in the above range.

The polyamide resin (A) contains a diamine-derived structural unit and a dicarboxylic acid-derived structural unit; 70 mol% or more of the diamine-derived structural unit is derived from xylylenediamine (preferably meta-xylylenediamine and/or para-xylylenediamine, more preferably meta-xylylenediamine); from 70.1 to 92.0 mol% of the dicarboxylic acid-derived structural unit is derived from an α,ω-linear aliphatic dicarboxylic acid having from 4 to 8 carbons; from 29.9 to 8.0 mol% of the dicarboxylic acid-derived structural unit is derived from an α,ω-linear aliphatic dicarboxylic acid having from 9 to 12 carbons.

In the polyamide resin (A), 70 mol% or more of the diamine-derived structural unit is derived from xylylenediamine. It is presumed that the use of xylylenediamine results in stacking of molecular chains due to influence of the benzene ring skeleton, and reduces a free volume in the resin, and thus that high oxygen barrier properties are exhibited. In the polyamide resin in the present embodiments, preferably 75 mol% or more, more preferably 80 mol% or more, still more preferably 85 mol% or more, even more preferably 90 mol% or more, even still more preferably 95 mol% or more, and yet even still more preferably 99 mol% or more of the diamine-derived structural unit is derived from xylylenediamine. The upper limit may be 100 mol%.

In the present embodiments, meta-xylylenediamine and para-xylylenediamine preferably account for 99 mol% or more of the entire xylylenediamine. A molar ratio of meta-xylylenediamine to para-xylylenediamine in the xylylenediamine is preferably from 10 to 100/from 90 to 0, more preferably from 30 to 100/from 70 to 0, still more preferably from 50 to 100/from 50 to 0, even more preferably from 80 to 100/from 20 to 0, even still more preferably from 90 to 100/from 10 to 0, and yet even still more preferably from 95 to 100/from 5 to 0, when a total of meta-xylylenediamine and para-xylylenediamine is 100 mol. When the ratio of meta-xylylenediamine is increased, an increase in melting point can be suppressed. When a processing temperature is decreased, the occurrence of scorching or gel can be more effectively suppressed.

Examples of diamines other than the xylylenediamine that can be used as raw material diamine components of the polyamide resin in the present embodiments include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having aromatic ring(s), such as para-xylylenediamine, bis(4-aminophenyl)ether, para-phenylenediamine, and bis(aminomethyl)naphthalene. One type can be used, or two or more types can be mixed and used.

The polyamide resin (A) in the present embodiments contains a diamine-derived structural unit and a dicarboxylic acid-derived structural unit; from 70.1 to 92.0 mol% of the dicarboxylic acid-derived structural unit is derived from an α,ω-linear aliphatic dicarboxylic acid having from 4 to 8 carbons; from 29.9 to 8.0 mol% of the dicarboxylic acid-derived structural unit is derived from an α,ω-linear aliphatic dicarboxylic acid having from 9 to 12 carbons. The use of the α,ω-linear aliphatic dicarboxylic acid having from 4 to 8 carbons can increase an amide bond density, and a polyamide resin having excellent oxygen barrier properties tends to be obtained. In addition, the melting point is lowered due to the use of the α,ω-linear aliphatic dicarboxylic acid having from 9 to 12 carbons. Therefore, an extrusion temperature is lowered, the occurrence of scorching or gel is suppressed, and flexibility is improved. Further, a polyamide resin having excellent pinhole resistance is obtained.

The α,ω-linear aliphatic dicarboxylic acid having from 4 to 8 carbons is, for example, succinic acid, glutaric acid, pimelic acid, adipic acid, or suberic acid, and is preferably adipic acid.

Examples of the α,ω-linear aliphatic dicarboxylic acid having from 9 to 12 carbons include azelaic acid, sebacic acid, undecanedioic acid, and dodecanedioic acid, and sebacic acid is preferable. The sebacic acid can be derived from a plant source and can enhance a bio-base degree of the resin.

Examples of dicarboxylic acid components other than the α,ω-linear aliphatic dicarboxylic acid having from 4 to 12 carbons include phthalic acid compounds, such as isophthalic acid, terephthalic acid, and ortho-phthalic acid; and naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type can be used, or two or more types can be mixed and used.

A proportion of the α,ω-linear aliphatic dicarboxylic acid having from 4 to 8 carbons (preferably adipic acid) in the dicarboxylic acid-derived structural unit is preferably 75.0 mol% or more, and more preferably 78.0 mol% or more. When the proportion is set to the lower limit value or more, the oxygen barrier properties tend to be further improved. Furthermore, the proportion of the α,ω-linear aliphatic dicarboxylic acid having from 4 to 8 carbons is preferably 88.0 mol% or less, more preferably 86.0 mol% or less, still more preferably 85.0 mol% or less, and even more preferably 84.0 mol% or less. When the proportion is set to the upper limit value or less, the flexibility tends to be improved and the pinhole resistance tends to be excellent.

A proportion of the α,ω-linear aliphatic dicarboxylic acid having from 9 to 12 carbons (preferably sebacic acid) in the dicarboxylic acid-derived structural unit is preferably 25.0 mol% or less, and more preferably 22.0 mol% or less. When the proportion is set to the upper limit value or less, the oxygen barrier properties tend to be further improved. Furthermore, the proportion of the α,ω-linear aliphatic dicarboxylic acid having from 9 to 12 carbons is preferably 12.0 mol% or more, more preferably 14.0 mol% or more, and still more preferably 15.0 mol% or more, and may be 16.0 mol% or more. When the proportion is set to the lower limit value or more, the flexibility tends to be improved and the pinhole resistance tends to be more excellent.

In the dicarboxylic acid-derived structural unit, a total of the structural unit derived from the α,ω-linear aliphatic dicarboxylic acid having from 4 to 8 carbons (preferably adipic acid) and the structural unit derived from the α,ω-linear aliphatic dicarboxylic acid having from 9 to 12 carbons (preferably sebacic acid) accounts for preferably 88 mol% or more, more preferably 90 mol% or more, still more preferably 91 mol% or more, even more preferably 93 mol% or more, even still more preferably 95 mol% or more, yet even still more preferably 97 mol% or more, and particularly still more preferably 99 mol% or more of the entire dicarboxylic acid-derived structural unit. The upper limit of the total may be 100 mol%.

One type or two or more types of each of the structural units derived from the α,ω-linear aliphatic dicarboxylic acid having from 4 to 8 carbons and the structural units derived from the α,ω-linear aliphatic dicarboxylic acid having from 9 to 12 carbons may be used. When two or more types are contained, the total amount thereof is preferably in the above range.

A particularly preferred embodiment of the polyamide resin in the present embodiments is a polyamide resin containing a diamine-derived structural unit and a dicarboxylic acid-derived structural unit, in which 95 mol% or more of the diamine-derived structural unit is derived from meta-xylylenediamine, from 80.0 to 84.0 mol% of the dicarboxylic acid-derived structural unit is derived from adipic acid, from 20.0 to 16.0 mol% of the dicarboxylic acid-derived structural unit is derived from sebacic acid, and a total of the adipic acid-derived structural unit and the sebacic acid-derived structural unit is 95 mol% or more of the dicarboxylic acid-derived structural unit.

The polyamide resin in the present embodiments contains the dicarboxylic acid-derived structural unit and the diamine-derived structural unit, but may also contain a structural unit other than the dicarboxylic acid-derived structural unit and the diamine-derived structural unit, or another site such as an end group. Examples of other structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Furthermore, the polyamide resin in the present embodiments may contain a minor component such as an additive used in synthesis.

In the polyamide resin (A) in the present embodiment, preferably 70 mass% or more, more preferably 80 mass% or more, still more preferably 90 mass% or more, even more preferably 95 mass% or more, even still more preferably 98 mass% or more, and yet even still more preferably 99 mass% or more of all the structural units excluding the end group are composed of the dicarboxylic acid-derived structural unit and the diamine-derived structural unit.

A lower limit of a number average molecular weight (Mn) of the polyamide resin (A) in the present embodiments is preferably 5,000 or more, more preferably 6,000 or more, and still more preferably 10,000 or more. An upper limit of the above Mn is preferably 100,000 or less, more preferably 50,000 or less, and still more preferably 30,000 or less. The polyamide with a number average molecular weight in such a range provides better thermal resistance, elastic modulus, dimensional stability, and molding processability. The number average molecular weight is measured according to the description in Paragraph [0057] of WO 2019/026499.

A lower limit of a relative viscosity of the polyamide resin (A) in the present embodiments is preferably 2.0 or more, more preferably 2.1 or more, and still more preferably 2.3 or more. On the other hand, an upper limit of the relative viscosity of the polyamide resin (A) is preferably 4.0 or less, more preferably 3.9 or less, and still more preferably 3.8 or less.

The relative viscosity of the polyamide resin (A) is measured in accordance with the conditions of JIS K 69020-2.

The polyamide resin (A) used in the present embodiments is preferably produced by a melt polycondensation (melt polymerization) method or a pressurized salt method using a phosphorus atom-containing compound as a catalyst, and is more preferably produced by the melt polycondensation method. A preferable method as the melt polycondensation method is a method in which a raw material diamine is added dropwise to a molten raw material dicarboxylic acid and heated under pressure to cause polymerization while condensed water is removed. A preferable method as the pressurized salt method is a method in which a salt formed from a raw material diamine and a raw material dicarboxylic acid is heated under pressure in the presence of water to cause polymerization in a molten state while added water and condensed water are removed. A known catalyst can be used, and examples of a catalyst containing sodium include sodium hypophosphite, sodium phosphite, and sodium hydrogen phosphite. Examples of a catalyst containing calcium include calcium hypophosphite and calcium phosphite.

In the present embodiment, a polymerization rate modifier may be added in addition to the phosphorus atom-containing compound. Examples of the polymerization rate modifier include alkali metal hydroxides, alkaline earth metal hydroxides, alkali metal acetates, and alkaline earth metal acetates, and alkali metal acetates are preferable.

The polyamide resin layer in the present embodiments may be composed of only one type or two or more types of polyamide resins (A) or may contain another component.

As the other components, additives such as polyamide resins other than the polyamide resin (A) of the present invention, thermoplastic resins other than the polyamide resin, oxidation reaction accelerators, reinforcing materials (fillers), antioxidants such as heat resistant stabilizers and weather resistant stabilizers (particularly heat resistant stabilizers), impact modifiers, flame retardants, flame retardant aids, mold release agents, dripping inhibitors, matting agents, ultraviolet absorbers, plasticizers, antistatic agents, color inhibitors, anti-gelling agents, and nucleators can be added as necessary. One, or two or more of these additives may each be used.

Another polyamide resin that may be contained in the polyamide resin layer in the present embodiments may be an aliphatic polyamide resin or a semi-aromatic polyamide resin.

Examples of the aliphatic polyamide resin include polyamide 6, polyamide 66, polyamide 46, polyamide 6/66 (copolymer of a polyamide 6 component and a polyamide 66 component), polyamide 610, polyamide 612, polyamide 410, polyamide 1010, polyamide 11, polyamide 12, polyamide 1012, and polyamide 9C (a polyamide formed from a mixed diamine of 1,9-nonanediamine and 2-methyl-1,8-octanediamine and 1,4-cyclohexane dicarboxylic acid).

Examples of the semi-aromatic polyamide resin include polyamide 4T, polyamide 6T, polyamide 6I, polyamide 6T/6I, polyamide 9T, polyamide 10T, and polyamide 9N.

When the polyamide resin layer in the present embodiments contains another polyamide resin, a content thereof is preferably 1 part by mass or more, and may be 10 parts by mass or more, and is preferably 66 parts by mass or less, more preferably 50 parts by mass or less, and still more preferably 30 parts by mass or less, with respect to 100 parts by mass of the polyamide resin (A). The polyamide resin layer in the present embodiments may contain only one type or two or more types of the other polyamide resins. When two or more types are contained, the total amount thereof is preferably in the above range.

The polyamide resin layer in the present embodiments may contain an oxidation reaction accelerator. When the polyamide resin layer contains the oxidation reaction accelerator, oxygen absorbability of the polyamide resin layer in the present embodiments can be enhanced.

The oxidation reaction accelerator may be any compound that exhibits an oxidation reaction promoting effect, but a compound containing a transition metal element is preferable, from the perspective of promoting an oxidation reaction of the polyamide resin (A). The transition metal element is preferably at least one selected from the transition metals of Group VIII of the Periodic Table of the Elements, manganese, copper, and zinc, and, from the viewpoint of effectively exhibiting oxygen absorption capacity, more preferably at least one selected from cobalt, iron, manganese, and nickel, and even more preferably cobalt.

When the oxidation reaction accelerator contains a transition metal element, a content thereof is preferably 10 ppm by mass or more, and also preferably 1000 ppm by mass or less, in terms of a transition metal concentration in the polyamide resin (A), from the perspective of promoting the oxidation reaction of the polyamide resin (A) and enhancing the oxygen absorption capacity of a molded product.

The transition metal concentration in the molded product can be measured using a known method such as ICP emission spectroscopy.

The oxidation reaction accelerator may be used alone or in combination of two or more types. When two or more types are used in combination, the total amount is preferably in the above-mentioned range.

An oxygen transmission rate (OTR, unit: cc/m²·atm·day) of the stretched film in the present embodiments is preferably 0.2 cc/m²·atm·day or less, and more preferably 0.1 cc/m²·atm·day or less. A lower limit is ideally 0 cc/m²·atm·day or more, but is practically 0.0001 cc/m²·atm·day or more.

The oxygen transmission rate is measured according to the descriptions of Examples which will be given later.

The stretched film in the present embodiments is obtained by stretching an unstretched polyamide resin layer. The oxygen barrier properties of the polyamide resin layer can be improved by stretching.

The stretching may be either uniaxial stretching or biaxial stretching, but is preferably biaxial stretching. The biaxial stretching may be sequential stretching or simultaneous stretching.

In the case of the uniaxial stretching, a stretching ratio is preferably 1.1 times or more, more preferably 2 times or more, still more preferably 2.5 times or more, and even more preferably 3.0 times or more. The upper limit is not particularly defined, but is preferably 20.0 times or less. In the case of the biaxial stretching, each stretching ratio is preferably 1.1 times or more, more preferably 2.0 times or more, still more preferably 4.0 times or more, and even more preferably 6.0 times or more. The upper limit is not particularly defined, but is preferably 20.0 times or less.

The unstretched polyamide resin layer may be stretched after forming a multilayer body with another layer, or the unstretched polyamide resin layer may be stretched and then bonded to another layer.

As for the method for stretching the unstretched polyamide resin layer, reference can be made to the descriptions in Paragraphs [0049] to [0053] of WO 2017/010390, the contents of which are incorporated herein by reference.

When the unstretched polyamide resin layer is combined with another layer to form a multilayer body, reference can be made to the descriptions in Paragraphs [0080] to [0092] of WO 2017/073560, the contents of which are incorporated herein by reference.

In addition, as for the production of the stretched film and the production of the multilayer body, reference can be made to the descriptions in Paragraphs [0025] to [0030] of JP 2019/208687 A1 within a range that does not depart from the spirit of the present invention, the contents of which are incorporated herein by reference.

A film can be produced by extruding a resin composition composed of the polyamide resin (A) and another component blended as necessary. Here, when the polyamide resin (A) is produced, for example, a molding temperature can be lowered by 10°C or more (preferably 20°C or more, and, for example, 30°C or less) as compared with the molding temperature when the structural unit derived from the α,ω-linear aliphatic dicarboxylic acid having from 9 to 12 carbons is changed to the structural unit derived from the α,ω-linear aliphatic dicarboxylic acid having from 4 to 8 carbons in an equimolar amount in the polyamide resin (A). As a result, gelation of the obtained film can be more effectively suppressed.

The multilayer body of the present embodiments is preferably used as a packaging material or a container. Examples of the packaging material or container of the present embodiments include those for foods, medical uses, and cosmetics.

Products that can be filled or packaged in the packaging material or container of the present embodiments include confectioneries such as rice confectioneries, bean confectioneries, nuts, biscuits, cookies, wafers, marshmallows, pies, half-baked cakes, candies, and snacks; staples such as bread, snack noodles, instant noodles, dried noodles, pasta, sterile packaged rice, rice porridge, rice gruel, packaged rice cake, and cereal foods; processed agricultural products such as pickled vegetables, boiled beans, fermented soybeans (natto), miso, frozen bean curd, bean curd, cooked enoki mushroom in soy sauce flavored sauce (nametake), konjak, processed edible wild vegetables, jams, peanut cream, salads, frozen vegetables, and processed potato products; processed animal products such as hams, bacon, sausages, processed chicken products, and corned beef; processed marine products such as fish hams, fish sausages, fish paste products, fish cakes (kamaboko), seaweed, preservable foods cooked in soy sauce flavored sauce (tsukudani), bonito flakes, salted seafood (shiokara), smoked salmon, and marinated spicy cod roe; fruits such as peach, orange, pineapple, apple, pear, and cherry; vegetables such as corn, asparagus, mushroom, onion, carrot, Japanese daikon radish, and potato; frozen daily dishes typified by hamburg steak, meat balls, fishery fried foods, gyoza dumplings, and croquettes; processed foods such as chilled ready-made dishes; dairy products such as butter, margarine, cheese, cream, instant creamy powder, and infant formula; foods such as soups, jellies, liquid seasonings, retort-pouch curry, pet foods, nursing foods, and emergency foods; tobacco; disposable warmers; pharmaceuticals; and cosmetics.

### Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

### Raw Material

PA6: polyamide 6, 1024B, available from Ube Industries, Ltd.
PP: polypropylene, FY6, available from Japan Polypropylene Corporation
Adhesive PP: adhesive polypropylene, Fusabond P353, available from Dow Chemical Company
MXD6: polyamide resin synthesized from meta-xylylenediamine and adipic acid, S6011, available from MITSUBISHI GAS CHEMICAL COMPANY, INC.

MXD610 (90/10): polyamide resin synthesized from meta-xylylenediamine, adipic acid, and sebacic acid (the molar ratio of adipic acid to sebacic acid is 90:10), synthesized according to the following synthesis example

### <Synthesis Example of MXD610 (90/10)>

In a reaction container with a stirrer, a partial condenser, a total condenser, a thermometer, a dropping funnel, a nitrogen gas introduction tube, and a strand die, weighed raw materials including 10,000 g (68 mol) of adipic acid, 1,538 g (7.6 mol) of sebacic acid, 0.33 g of sodium hypophosphite monohydrate (NaH₂PO₂ • H₂O) (5 ppm by mass in terms of the phosphorus atom concentration in the polyamide resin), and 0.13 g of sodium acetate were blended, and then sufficiently purged with nitrogen, after which the reaction container was filled with nitrogen to an internal pressure of 0.4 MPa, and the inside of the system was heated to 190°C while stirring under a small nitrogen gas flow.

To this, 10,500 g (77 mol) of meta-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, the obtained polymer was removed from the strand die and pelletized, and approximately polyamide MXD610 (90/10) was thereby obtained. The obtained resin was dried in a batch-type dryer at 180°C for 2 hours, and a relative viscosity of 2.7 was obtained by increasing the polymerization degree.

MXD610 (84/16): polyamide resin synthesized from meta-xylylenediamine, adipic acid, and sebacic acid (the molar ratio of adipic acid to sebacic acid is 84:16), synthesized according to the following synthesis example

### <Synthesis Example of MXD610 (84/16)>

In a reaction container with a stirrer, a partial condenser, a total condenser, a thermometer, a dropping funnel, a nitrogen gas introduction tube, and a strand die, weighed raw materials including 10,000 g (68 mol) of adipic acid, 2,636 g (13 mol) of sebacic acid, 0.36 g of sodium hypophosphite monohydrate (NaH₂PO₂•H₂O) (5 ppm by mass in terms of the phosphorus atom concentration in the polyamide resin), and 0.14 g of sodium acetate were blended, and then sufficiently purged with nitrogen, after which the reaction container was filled with nitrogen to an internal pressure of 0.4 MPa, and the inside of the system was heated to 190°C while stirring under a small nitrogen gas flow.

To this, 11,360 g (83 mol) of meta-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, the obtained polymer was removed from the strand die and pelletized, and approximately polyamide MXD610 (84/16) was thereby obtained. The obtained resin was dried in a batch-type dryer at 180°C for 2 hours, and a relative viscosity of 2.7 was obtained by increasing the polymerization degree.

MXD610 (80/20): polyamide resin synthesized from meta-xylylenediamine, adipic acid, and sebacic acid (the molar ratio of adipic acid to sebacic acid is 80:20), synthesized according to the following synthesis example

### <Synthesis Example of MXD610 (80/20)>

In a reaction container with a stirrer, a partial condenser, a total condenser, a thermometer, a dropping funnel, a nitrogen gas introduction tube, and a strand die, weighed raw materials including 10,000 g (68 mol) of adipic acid, 3,460 g (17 mol) of sebacic acid, 0.38 g of sodium hypophosphite monohydrate (NaH₂PO₂•H₂O) (5 ppm by mass in terms of the phosphorus atom concentration in the polyamide resin), and 0.15 g of sodium acetate were blended, and then sufficiently purged with nitrogen, after which the reaction container was filled with nitrogen to an internal pressure of 0.4 MPa, and the inside of the system was heated to 190°C while stirring under a small nitrogen gas flow.

To this, 11,813 g (87 mol) of meta-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, the obtained polymer was removed from the strand die and pelletized, and approximately polyamide MXD610 (80/20) was thereby obtained. The obtained resin was dried in a batch-type dryer at 180°C for 2 hours, and a relative viscosity of 2.7 was obtained by increasing the polymerization degree.

MXD610 (70/30): polyamide resin synthesized from meta-xylylenediamine, adipic acid, and sebacic acid (the molar ratio of adipic acid to sebacic acid is 70:30), synthesized according to the following synthesis example

### <Synthesis Example of MXD610 (70/30)>

In a reaction container with a stirrer, a partial condenser, a total condenser, a thermometer, a dropping funnel, a nitrogen gas introduction tube, and a strand die, weighed raw materials including 10,000 g (68 mol) of adipic acid, 5,931 g (29 mol) of sebacic acid, 0.44 g of sodium hypophosphite monohydrate (NaH₂PO₂•H₂O) (5 ppm by mass in terms of the phosphorus atom concentration in the polyamide resin), and 0.17 g of sodium acetate were blended, and then sufficiently purged with nitrogen, after which the reaction container was filled with nitrogen to an internal pressure of 0.4 MPa, and the inside of the system was heated to 190°C while stirring under a small nitrogen gas flow.

To this, 13,500 g (99 mol) of meta-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, the obtained polymer was removed from the strand die and pelletized, and approximately polyamide MXD610 (70/30) was thereby obtained. The obtained resin was dried in a batch-type dryer at 180°C for 2 hours, and a relative viscosity of 2.7 was obtained by increasing the polymerization degree.

### Example 1

### <Production of Single-layer Stretched Film (polyamide resin layer)>

The obtained polyamide resin was supplied to a single-screw extruder equipped with a T-die (available from PLABOR Research Laboratory of Plastics Technology Co., Ltd., screw diameter: 30 mm) and melt-extruded from the die at an extrusion temperature of 240°C and a channel temperature of 240°C. Specifically, the polyamide resin (A) was extruded to obtain films having a width of 175 mm and thicknesses of 140 µm and 250 µm.

The obtained film having a thickness of 140 µm was cut into 120 mm square. Thereafter, by using a batch-type biaxial stretching machine (tenter method; EX10-S5, available from Toyo Seiki Seisaku-sho, Ltd.), while heating is performed in air atmosphere at 100°C, stretching was performed in MD and TD in a manner that the MD stretching ratio was 3.0-fold, the TD stretching ratio was 3.0-fold, and the total stretching ratio was 9.0-fold, and thus a stretched film having a thickness of 15 µm was obtained. During this stretching process, relaxation operation was performed in the middle of the process in a manner that the MD relaxation percentage was 2.5% and the TD relaxation percentage was 2.5%. After the stretching, heat fixation was performed. The heat fixation temperature was 140°C, and the heat fixation time was 45 seconds, and a single-layer stretched film was obtained.

A thickness of the obtained single-layer stretched film was 15 µm.

### <Production of Multilayer Stretched Film (multilayer body)>

A multilayer structure (multilayer film) composed of polyamide 6 layer (PA6 layer)/polyamide resin (A) (MXD610) layer was formed from polyamide 6 (PA6) and MXD610 at an extrusion temperature of 240°C and a post-lamination channel temperature of 240°C using a multilayer film molding machine equipped with two single-screw extruders (available from PLABOR Research Laboratory of Plastics Technology Co., Ltd., screw diameter: 40 mm) and a channel for forming a multilayer structure of two types and two layers (equipped with a T-die). The thickness of each layer was 70 µm, and the total thickness of the film layers was 140 um. The obtained film was cut into 120 mm square. Thereafter, by using a batch-type biaxial stretching machine (tenter method; EX10-S5, available from Toyo Seiki Seisaku-sho, Ltd.), while heating is performed in air atmosphere at 100°C, stretching was performed in MD and TD in a manner that the MD stretching ratio was 3.0-fold, the TD stretching ratio was 3.0-fold, and the total stretching ratio was 9.0-fold, and thus a stretched film having a thickness of 15 µm was obtained. During this stretching process, relaxation operation was performed in the middle of the process in a manner that the MD relaxation percentage was 2.5% and the TD relaxation percentage was 2.5%. After the stretching, heat fixation was performed. The heat fixation temperature was 170°C, and the heat fixation time was 45 seconds, and a stretched multilayer film was obtained.

### <Oxygen Transmission Rate (OTR)>

For the obtained single-layer stretched film (polyamide resin layer), oxygen transmission rate (OTR, unit: cc/m²·atm·day) was measured in an atmosphere at 23°C and a relative humidity (RH) of 60% by the isopiestic method. The pressure of the oxygen atmosphere was set to 1 atm, and the measurement time was 24 hours (1 day).

The oxygen transmission rate (OTR) was measured using an oxygen transmission rate measuring device ("OX-TRAN (trade name) 2/21", available from MOCON Inc.).

The oxygen transmission rate was evaluated according to the following categories, and the results are indicated in Table 1 below.
A: 0.1 cc/m²·atm·day or less
B: More than 0.1 cc/m²·atm·day and 0.2 cc/m²·atm·day or less
C: More than 0.2 cc/m²·atm·day and 0.3 cc/m²·atm·day or less

### <Pinhole Resistance>

The obtained stretched multilayer film was cut into 25 cm square and fixed to a pinhole resistance tester, and the film was bent for 3000 times by continuously subjecting the film to 440° twisting motion and 65 mm linear motion at a rate of 40 times/min. The number of pinholes of the film after bending was measured by using a pinhole inspection machine to calculate the number of pinholes per 100 cm² of the film. Note that the number of pinholes per 100 cm² of the film is calculated as described below. Number of pinholes (number/100 cm2) = total number of pinholes (number)/effective area tested (cm2) × 100

In the present examples, Gelbo Flex Tester, available from Rigaku Kogyo, was used as the pinhole resistance tester. Poroscope DC, available from Fischer, was used as the pinhole inspection machine.

The number of pinholes was evaluated according to the following categories, and the results are indicated in Table 1 below.
A: 5 or less
B: From 6 to 9
C: 10 or more

### <Gelation Suppression>

In the present invention, the effect of suppressing gel formation of the polyamide resin was evaluated by comparing the gel fractions of the polyamide resins heated under high pressure in a molten state for a predetermined time and at a predetermined temperature, assuming a state where the polyamide resin was exposed during molding. When the pressurized and heated resin is immersed in hexafluoroisopropanol (HFIP) for 24 hours, the ungelled resin is completely dissolved, whereas the gelled resin remains as an insoluble component in a swollen state. In the present example, the gel fraction was calculated from the insoluble component. In the present invention, the gel fraction refers to a value determined in percentage by dividing the mass of the residue obtained by drying the insoluble component after filtration under reduced pressure with a membrane filter by the mass of the resin weighed in advance before immersion in HFIP as a denominator.

### <<Measurement of Gel Fraction>>

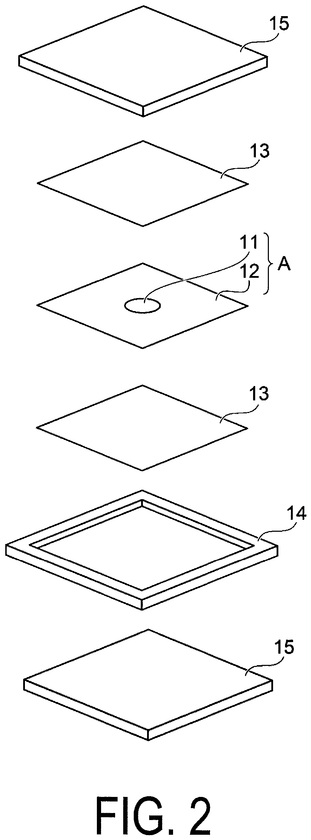

The single-layer unstretched film (250 um-thick film) obtained as described above was cut into four circular shapes each having a diameter of 30 mm (hereinafter referred to as "circular films"). The circular films 11 were concentrically stacked, and as illustrated in FIG. 2, the concentrically stacked circular films were fitted into a hole portion of a 120 × 120 mm polytetrafluoroethylene sheet 12 having a thickness of 1 mm and a hole bored with a hole diameter of 30 mm to obtain a sheet A. The sheet A was sandwiched between two 1 mm-thick 120 × 120 mm polytetrafluoroethylene sheets 13 and 13.

Next, the sheet A sandwiched between the polytetrafluoroethylene sheets was placed at the center of a 15 mm-thick 150 mm × 150 mm metal plate 14 having a 3 mm-deep 120 mm × 120 mm groove at the center, and then sandwiched on their both sides by 15 mm-thick 150 mm × 150 mm metal plates 15, and the metal plates 14 and 15 were fixed with bolts.

Subsequently, heating was performed at the melting point of each polyamide resin + 30°C for predetermined times (72, 96, 120, 144, and 168 hours) in a state where the metal plates were sandwiched at a pressure of 30 kg/cm² by a hot press machine which had been heated in advance. After a lapse of each predetermined time, the metal plates were taken out and rapidly cooled; the sheet A was taken out after it was sufficiently cooled to room temperature; the circular films with a thickness of 1 mm located inside was taken out.

The circular films were then dried in a constant temperature dryer at 60°C for 30 minutes, and 100 mg of the dried sample was immediately weighed out. The weighed retained sample was immersed in hexafluoroisopropanol (HFIP) with a purity of 99% or more from 10 mL for 24 hours, and then filtered under reduced pressure through a pre-weighed polytetrafluoroethylene membrane filter having a pore diameter of 300 µm. The residue remaining on the membrane filter was washed three times with 2 mL HFIP, and the filter to which the residue was attached was dried at 60°C for 30 minutes in a constant-temperature dryer.

The total mass of the dried residue and the filter was weighed, and the amount of HFIP-insoluble component (gel amount) of the retained sample was calculated from a difference between the total mass and the mass of the membrane filter weighed in advance. The gel fraction was determined as mass% of the HFIP-insoluble component relative to the retained sample before the HFIP immersion.

The evaluation was performed three times for each heating time, and the average value thereof was defined as the gel fraction at each heating time. The heating time at which the gel fraction reached 10% or more was investigated from the above measurement method, and the evaluation classification was as follows.
A: 168 hours or more
B: 96 hours or more and less than 168 hours
C: Less than 96 hours

The results are indicated in Table 1.

### Comparative Example 1

The same procedures were conducted as in Example 1, except that the type of the resin used in the other layer and the type of the polyamide resin (A) were changed as indicated in Table 1, and that the extrusion temperature was changed to 260°C.

### Examples 2 to 3 and Comparative Examples 1 and 2

The same procedures were conducted as in Example 1, except that the type of the resin used in the other layer and the type of the polyamide resin (A) were changed as indicated in Table 1.

### Examples 4 and 5

### <Production of Multilayer Body>

A multilayer structure (multilayer film) composed of PP layer/adhesive PP layer/polyamide resin layer was formed from the polyamide resin indicated in Table 1, PP and adhesive PP at an extrusion temperature of 240°C and a post-lamination channel temperature of 240°C using a multilayer film molding machine equipped with three single-screw extruders (available from PLABOR Research Laboratory of Plastics Technology Co., Ltd., screw diameter: 40 mm) and a channel for forming a multilayer structure of three types and three layers (equipped with a T-die). The thickness of the polyamide resin layer was 65 µm, the thickness of the PP layer was 65 µm, the thickness of the adhesive PP layer was 10 µm, and the total thickness of the film layers was 140 um. The obtained film was cut into 120 mm square. Thereafter, by using a batch-type biaxial stretching machine (tenter method; EX10-S5, available from Toyo Seiki Seisaku-sho, Ltd.), while heating is performed in air atmosphere at 100°C, stretching was performed in MD and TD in a manner that the MD stretching ratio was 3.0-fold, the TD stretching ratio was 3.0-fold, and the total stretching ratio was 9.0-fold, and thus a stretched multilayer film having a thickness of 15 um was obtained. During this stretching process, relaxation operation was performed in the middle of the process in a manner that the MD relaxation percentage was 2.5% and the TD relaxation percentage was 2.5%. After the stretching, heat fixation was performed. The heat fixation temperature was 140°C, and the heat fixation time was 45 seconds, and a multilayer body (stretched multilayer film) was obtained.

The obtained multilayer film was evaluated for pinhole resistance in the same manner as described above. The OTR of the single-layer stretched film was measured in the same manner as in Example 1 except that the type of the polyamide resin used was changed.

The results are indicated in Table 1.

**[Table 1]**

| | | Comparative Example 1 | Example 1 | Example 2 | Example 3 | Comparative Example 2 | Example 4 | Example 5 |
|---|---|---|---|---|---|---|---|---|
| Another layer | Type | PA6 | PA6 | PA6 | PA6 | PA6 | PP | PP |
| Polyamide resin | Abbreviation | MXD6 | MXD610 (90/10) | MXD610 (84/16) | MXD610 (80/20) | MXD610 (70/30) | MXD610 (80/20) | MXD610 (84/16) |
| | Diamine species | MXDA | MXDA | MXDA | MXDA | MXDA | MXDA | MXDA |
| | Dicarboxylic acid species (a1) | Adipic acid | Adipic acid | Adipic acid | Adipic acid | Adipic acid | Adipic acid | Adipic acid |
| | Dicarboxylic acid species (a2) | - | Sebacic acid | Sebacic acid | Sebacic acid | Sebacic acid | Sebacic acid | Sebacic acid |
| | a1/a2 molar ratio | 100/0 | 90110 | 84/16 | 80/20 | 70/30 | 80/20 | 84/16 |
| OTR of stretched film (polyamide resin layer) | | A | B | B | B | C | B | B |
| Pinhole resistance | | C | B | A | A | A | A | A |
| Gelation suppression | | C | B | A | A | A | A | A |

The ratio of a1 to a2 in Table 1 above is a molar ratio.

The unit of oxygen transmission rate (OTR) is cc/m²·atm·day.

As is clear from the above results, the multilayer bodies of the present invention excelled in oxygen barrier properties and pinhole resistance (Examples 1 to 5). Further, gelation was suppressed.

On the other hand, when MXD6 was used in the polyamide resin layer (Comparative Example 1), the pinhole resistance was poor. Further, suppression of gelation was insufficient.

In addition, when the rate of modification of the polyamide resin used in the polyamide resin layer with the α,ω-linear aliphatic dicarboxylic acid having from 9 to 12 carbons was high (Comparative Example 2), the barrier properties were poor.

### Reference Signs List

- 1: Multilayer body
- 2: Polyamide resin layer (stretched film)
- 3: Another layer
- 11: Circular film
- 12: Polytetrafluoroethylene sheet with hole
- 13: Polytetrafluoroethylene sheet
- 14: Metal plate with groove
- 15: Metal plate

## Claims

1. A multilayer body comprising a stretched film and a layer other than the stretched film, the stretched film comprising a polyamide resin (A) in a proportion of more than 60 mass%,
the polyamide resin (A) comprising a diamine-derived structural unit and a dicarboxylic acid-derived structural unit, 70 mol% or more of the diamine-derived structural unit being derived from xylylenediamine, from 70.1 to 92.0 mol% of the dicarboxylic acid-derived structural unit being derived from an α,ω-linear aliphatic dicarboxylic acid having from 4 to 8 carbons, and from 29.9 to 8.0 mol% of the dicarboxylic acid-derived structural unit being derived from an α,ω-linear aliphatic dicarboxylic acid having from 9 to 12 carbons.

2. The multilayer body according to claim 1, wherein at least one of the layers other than the stretched film is a layer comprising polyamide 6 and/or polyamide 6/66.

3. The multilayer body according to claim 1 or 2, wherein at least one of the layers other than the stretched film is a layer comprising a polyolefin.

4. The multilayer body according to any one of claims 1 to 3, wherein from 75.0 to 88.0 mol% of the dicarboxylic acid-derived structural unit is derived from the α,ω-linear aliphatic dicarboxylic acid having from 4 to 8 carbons, and from 25.0 to 12.0 mol% of the dicarboxylic acid-derived structural unit is derived from the α,ω-linear aliphatic dicarboxylic acid having from 9 to 12 carbons.

5. The multilayer body according to any one of claims 1 to 4, wherein the α,ω-linear aliphatic dicarboxylic acid having from 4 to 8 carbons comprises adipic acid, and the α,ω-linear aliphatic dicarboxylic acid having from 9 to 12 carbons comprises sebacic acid.

6. The multilayer body according to any one of claims 1 to 5, wherein 70 mol% or more of the diamine-derived structural unit is derived from meta-xylylenediamine.
